# EUROPÄISCHE PATENTANMELDUNG

(11) **EP 1 837 934 A1**
(43) Veröffentlichungstag der Anmeldung: **26.09.2007**
(21) Anmeldenummer: 06005816.1
(22) Anmeldetag: 22.03.2006
(51) Int. Cl.: H01M 2/20, H01R 11/28

(54) **Klemmvorrichtung zum Laden einer Fahrzeugbatterie**

(71) Anmelder: Sickert & Hafner GmbH Automotive Systems, 63628 Bad Soden-Salmünster (DE)
(72) Erfinder: Sickert, Sigurd, 63628 Bad Soden-Salmünster (DE)
(74) Vertreter: Behrens, Helmut

(57) **Zusammenfassung**

Die Erfindung betrifft die Klemmvorrichtung zum Laden einer Fahrzeugbatterie, die als langgestreckter Balken (1) ausgebildet ist, der aus zwei durch ein drehbar gelagertes Mittelteil (2) verbundene Ladearmen (3,4) besteht, wobei in jedem Ladearm (3,4) elektrische Übertragungselemente integriert sind, die mit jeweils einem seitlich nach außen abstehenden Ladekontakt (8,25) verbunden sind. Die Erfindung ist dadurch gekennzeichnet, dass die elektrischen Übertragungselemente jeweils aus einem in jedem Ladearm (3,4) eingelassenen Metallrohr (6) bestehen, in dem ein eingepasster Kontaktbolzen (9) längs verschiebbar angeordnet ist und an dem der Ladekontakt (8,25) befestigt ist und bei dem der Ladekontakt (8) mindestens durch einen Längsschlitz (7) in den Metallrohren (6) nach außen geführt ist und dass das Mittelteil (2) zwei axial in einem Isolierwerkstoff befestigte isolierend voneinander beabstandete metallische Rundelemente (5) enthält, die in die eingelassenen Metallrohre (6) der Ladearme (3,4) eingepasst und axial fixiert sind und die steckbar mit jeweils einem Anschlusspol eines Anschlusskabels verbunden sind.

## Beschreibung

Die Erfindung betrifft eine Klemmvorrichtung zum Laden einer Fahrzeugbatterie gemäß dem Oberbegriff des Patentanspruchs 1.

Zum Laden einer Fahrzeugbatterie wird von einem Ladegerät meist zu jedem Batteriepol ein einadriges Kabel herangeführt und mit einer daran befestigten Klemmvorrichtung lösbar befestigt. Dabei sind die Klemmvorrichtungen häufig als Polzangen ausgebildet, die durch eine Feder zwei Klemmbacken an die Batteriepole anklemmen. Bei modernen Fahrzeugfertigungen wird allerdings die Fahrzeugbatterie durch verschiedene Testverbraucher und Funktionsprüfungen derart belastet, dass sie während der Fahrzeugproduktion nachgeladen werden muss. Dazu sind Klemmvorrichtungen notwendig, die schnell an- und abgeklemmt werden können und einen Verpolungsschutz gewährleisten. Derartige Polzangen sind dabei häufig wegen der langen Zangenarme zu groß, da die Batterien oft in niedrigen Batteriefächern eingebaut sind oder die Kabel müssen durch schmale Zugangsöffnungen geführt werden.

Eine Kabelanschlussklemme in besonders flacher Bauweise ist aus der EP 09 56 617 B1 bekannt. Diese besteht im wesentlichen aus zwei axial verschiebbaren Klemmbacken, die an den einander zugekehrten Seiten jeweils eine halbkreisförmige Bohrung aufweisen, die an die Durchmesser der Batteriepole angepasst ist. Diese Klemmbacken sind gegeneinander verschiebbar in einem u-förmigen Gehäuseteil eingesetzt, in der eine Klemmbacke mit einer Federkraft belastet ist, die diese Klemmbacke gegen die andere verschiebt. Durch eine Kunststoffabdeckung mit entsprechenden Mitnahmeschlitzen können die Klemmbacken gegen die Federkraft verschoben werden, so dass sie sich leicht auf die einzelnen Batteriepole aufsetzen lassen und ebenso wieder abgenommen werden können.

Dabei drücken sich die Klemmbacken durch die Druckfeder im unbetätigten Zustand gegen den jeweiligen Batteriepol und gewährleisten dadurch eine gute elektrische Kontaktgabe. Allerdings sind diese Polklemmen jeweils mit einem Stromzuführungskabel verbunden, dass sich im Produktionsprozess einer Fahrzeugherstellung bei den dauernden An- und Abklemmvorgängen leicht mit dem anderen Anschlusskabel verdreht und so nur schwer handhabbar ist. Im übrigen können mit diesen Polklemmen keine Nachladungen in betriebsbereiten Einbauzustand der Batterie durchgeführt werden, da die Klemmbacken an die Batteriepole angepasst sind, so dass zuvor die daran befestigten Batterieanschlussklemmen entfernt werden müssen. Dies würde unnötige Montagezeit beanspruchen und den Produktionsprozess stören, da dieser häufig auf einen betriebsbereiten Fahrzeugstromkreis angewiesen ist.

Aus der DE 20 2004 010 899 U1 ist eine einteilige Ladeklemmleiste bekannt, die zwischen die Polklemmen der angeschlossenen Fahrzeugbatterie gespannt werden kann und deshalb auch im Betriebszustand eine Nachladung ermöglicht. Diese besteht aus einem langgestreckten Balken aus einem isolierenden Kunststoffmaterial, der zwei Ladearme enthält, zwischen denen ein drehbar gelagertes Kunststoffmittelteil angeordnet ist. Durch das Mittelteil werden die in einem gemeinsamen Kabel herangeführten Stromzuführungsleitungen intern mit den beiden Ladekontakten verbunden. Die beiden Ladearme sind durch eine Stiftverbindung zueinander starr angeordnet und enthalten jeweils einen nach außen abstehenden Ladekontakt, der jeweils mit einem der beiden Polklemmen der Fahrzeugbatterie verbindbar ist. Der eine Ladekontakt ist dabei fest und formschlüssig in einem für den als Minuspol gekennzeichneten Balkenarm eingelassen, während der als Pluspol gekennzeichnete Ladekontakt über einen Längsschlitz in diesem Balkenarm gegen eine Schraubenfeder verschiebbar angeordnet ist. Dadurch kann die Klemmleiste an unterschiedlich große Batterieausführungen angepasst werden. Zur einfachen Kontaktgabe werden die beiden Ladekontakte durch die Federkraft der Schraubenfeder zwischen die Polklemmen der Batterie geklemmt. Dabei ist der Balkenarm für den Pluspol durch eine Längsbohrung innen hohl ausgebildet, in der die Schraubenfeder als Druckfeder eingeschoben ist und auf den Ladekontakt eine Druckkraft ausübt. Zur elektrischen Verbindung gleitet der Ladekontakt in der Bohrung auf einem als dünnens Blech ausgebildeten Schleifkontakt, an dem im Bereich des Mittelteils das Anschlusskabel angeschraubt oder angelötet ist. Zur Verdrahtung ist das Kunststoffmittelteil als t-förmiges hohles Kunststoffspritzteil ausgebildet, das in Balkenlängsrichtung zwei Kunststoffzapfen aufweist, die in der axialen Bohrung der Balkenarme drehbar fixiert sind. Durch diese innen hohlen Kunststoffzapfen sind die jeweiligen Ladespannungsleitungen zu den beiden Ladekontakten geführt und mit diesen durch eine Löt- oder Schraubverbindung elektrisch verbunden. Im quer abstehenden Quersteg des Mittelteils ist das zweiadrige Anschlusskabel eingegossen und mit einer zusätzlichen Zugentlastung verbunden. In der Praxis hat sich durch die häufigen An- und Abklemmvorgänge und insbesondere bei hohen Ladeströmen die interne Verdrahtung und Kontaktierung als störanfällig erwiesen. Desweiteren hat sich heraugestellt, dass die Ladeklemmleiste an unterschiedliche Batterieausführungen und Einbauverhältnisse zu wenig anpassungsfähig ist.

Der Erfindung liegt deshalb die Aufgabe zugrunde, eine Klemmvorrichtung zum Laden einer Fahrzeugbatterie der eingangs genannten Art so zu verbessern, dass sie auch für Batterien mit höheren Ladeströmen und den unterschiedlichsten Ausführungsgrößen oder zur Ladung bei ungünstigen Einbauverhältnissen geeignet ist, einen einfachen kostengünstigen Aufbau aufweist und auch bei ständig wechselndem Gebrauch eine lange Lebensdauer gewährleistet.

Diese Aufgabe wird durch die in Patentanspruch 1 angegebene Erfindung gelöst. Weiterbildung und vorteilhafte Ausführungsbeispiele der Erfindung sind in den Unteransprüchen angegeben.

Die Erfindung hat den Vorteil, dass durch die beidseitige Verschiebbarkeit der Ladekontakte bei guter Handhabbarkeit ein größerer Klemmbereich erreicht wurde, mit dem sowohl kleine als auch sehr große Fahrzeugbatterien mit hoher Ladekapazität und damit hohem Ladestrom einfach anklemmbar sind. Dadurch sind gleichzeitig auch sehr kleine Ladekontaktabstände realisierbar geworden, wie sie bei verschiedenen Ladestützpunkten im Motorraum vorgesehen sind, so dass mit dieser Klemmvorrichtung vorteilhafterweise auch wahlweise normal zugängliche als auch schwer erreichbare Fahrzeugbatterien im Einbauzustand anklemmbar sind.

Die Erfindung hat weiterhin den Vorteil, dass durch die verdrahtungsfreie verschiebbare Kontaktierung innerhalb der Klemmvorrichtung auch hohe Ladeströme stets sicher übertragbar sind und dies auch noch nach tausenden von Ladevorgängen innerhalb eines dynamischen Fertigungsprozesses. Dabei haben insbesondere die in den Ladearmen eingelassenen Metallrohre den Vorteil, das hierin auf einfache Weise sowohl die verschiebbaren Kontaktbolzen mit den Ladekontakten nahezu widerstandslos einpassbar sind und gleichzeitig eine leichte Verschiebbarkeit gewährleisten. Darüber hinaus gestatten diese eingelassenen Metallrohre in den Ladearmen auch einen drehbaren Kontaktanschluss der elektrisch leitenden metallischen Rundelemente zum Mittelteil, die gleichzeitig als Steckkontakt für die Anschlussleitungen ausgebildet sind, so dass auch bei einer drehbaren Kabelzuführung keine Anschlussleitung auf Torsion beansprucht wird, wodurch vorteilhafterweise auch bei einer Vielzahl der Ladevorgänge eine hohe Lebensdauer erreichbar ist.

Eine besondere Ausgestaltung der Erfindung mit einem federbelasteten verschiebbaren Ladekontakt in einem Ladearm und einem arretierbaren zweiten verschiebbaren Ladekontakt in dem anderem Ladearm hat den Vorteil, dass diese Klemmvorrichtung auch auf bestimmte Ladestützpunkte im Motorraum festklemmbar ist, die lediglich Polabstände aufweisen, die kleiner als die Polabstände bisher gängiger Fahrzeugbatterien sind. Da diese Klemmvorrichtung vorteilhafterweise auch mittels einer Federkraft zwischen die Polkontakte des Ladestützpunkts aufklemmbar ist, wird auch eine feste Ladeverbindung und gute Kontaktgabe ohne spezielle Kontaktadaptierungen erreicht. Dies ist insbesondere im Produktionsprozess verschiedener Fahrzeugtypen eines Produktionsbandes vorteilhaft, da bei einzelnen Fahrzeugtypen dessen Fahrzeugbatterien während des Produktionsvorgangs nicht zugänglich sind, aber dieselben Klemmvorrichtungen benutzt werden können.

Eine weitere besondere Ausführungsart der Erfindung mit zwei gegen eine Federkraft verschiebbarer Ladekontakte hat den Vorteil, dass damit auch sehr verschiedene Batterietypen mit sehr großen Kontaktabstandsunterschieden mit verhältnismäßig gleich großer Klemmkraft angeschlossen werden können, ohne dass es dafür besonderer Federausführungen oder unverhältnismäßig langer Ladearme bedarf. Damit wird gleichzeitig auch eine nahezu symmetrische Klemmvorrichtung erreicht, die durch die gleichartigen Ladearme einfach anklemmbar ist, in kleineren Batteriekästen eingesetzt werden kann und durch kleine Zugangsöffnungen zur Fahrzeugbatterie zuführbar ist.

Bei einer weiteren besonderen Ausführung mit zwei gegen eine Federkraft verschiebbaren Ladekontakten sind noch seitliche Zughebel vorgesehen, durch die der zweite Ladekontakt mit Hilfe eines Fingers zusätzlich verschoben werden kann, wodurch vorteilhafterweise auch bei zwei gegen eine Federkraft benutzbare Verschiebewege die Klemmvorrichtung mittels einer Einhandbedienung zwischen den Polklemmen einer angeschlossenen Fahrzeugbatterie anschließbar ist.

Bei einer weiteren besonderen Ausbildung der Erfindung ist gleichzeitig vorgesehen, die beiden Ladearme äußerlich verschiedenfarbig auszugestalten oder durch unterschiedliche elastische Aufschiebehülsen zu kennzeichnen, wodurch auf einfache Weise eine Falschpolung verhinderbar ist.

Die Erfindung wird anhand eines Ausführungsbeispiels, das in der Zeichnung dargestellt ist, näher erläutert. Es zeigen:
- Fig. 1:: eine Klemmvorrichtung mit zwei gegen eine Federkraft verschiebbare Ladekontakte, und
- Fig. 2:: eine Klemmvorrichtung mit einem gegen eine Federkraft verschiebbaren Ladekontakt und mit einen in Arretierstufen verschiebbaren zweiten Ladekontakt.

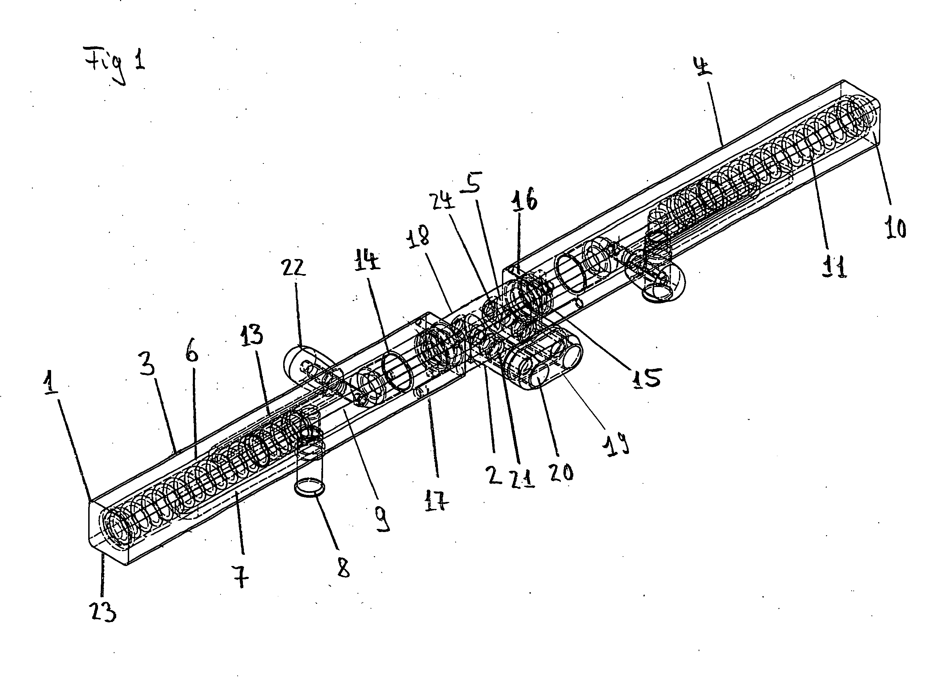

In Fig. 1 der Zeichnung ist eine Klemmvorrichtung zum Laden einer Fahrzeugbatterie dargestellt, die als langgestreckter Balken 1 ausgebildet ist, der aus zwei durch ein Mittelteil 2 verbundene Ladearme 3,4 besteht, die durch im Mittelteil 2 eingegossene Kontakthülsen 5 als Rundelemente verbunden sind, wobei in den beiden Ladearmen 3,4 ein Metallrohr 6 mit Längsschlitz 7 integriert ist, in dem jeweils ein Ladekontakt 8 mit einem Kontaktbolzen 9 längs verschiebbar angeordnet ist.

Die beiden Ladearme 3,4 sind dabei weitgehend gleichartig und symmetrisch zueinander ausgebildet. Jeder Ladearm 3,4 besteht vorzugsweise aus einem Vierkantstab 23 aus einem harten Kunststoffmaterial mit einem quadratischen Querschnitt von ca. 20 mm Kantenlänge und ist ca. 190 mm lang. In jedem Ladearm 3,4 ist eine Längsbohrung eingearbeitet, in die ein Metallrohr 6 vorzugsweise aus Messing mit einem Innendurchmesser von ca. 15 mm und einem Außendurchmesser von ca. 18 mm kraft- und formschlüssig auf einer Länge von ca. 180 mm eingeschoben ist. Zu einer Oberflächenseite ist ein ca. 80 mm langer Längsschlitz 7 bis in den Innenraum des Metallrohrs 6 ausgefräst, in dem der Ladekontakt 8 längs verschieblich geführt ist. Im Metallrohr 6 ist weiterhin ein längs verschieblicher Kontaktbolzen 9 aus Messing eingepasst, der einen Außendurchmesser von ca. 15 mm und eine Länge von vorzugsweise 50 mm aufweist. Dieser Kontaktbolzen enthält in seiner axialen Mitte eine Querbohrung, in der der Ladekontakt 8 durch den Längsschlitz 7 hindurch eingeschraubt wird. Der Ladekontakt 8 ist vorzugsweise als zylinderförmiger Rundstift von etwa 20 mm Länge und 10 mm Durchmesser ausgebildet und besteht vorzugsweise auch aus Messing. Im Metallrohr 6 ist zwischen den Kontaktbolzen 9 und dem äußeren Ladearm-Ende 10 eine Schraubenfeder 11 als Druckfeder angeordnet, die soweit gespannt ist, dass sie den Ladekontakt 8 gegen das innen liegende Ende des Längsschlitzes 7 mit einer vorgegebenen Federspannung andrückt.

Zur manuellen Verschiebung des Ladekontakts 8 entgegen der Federkraft ist vorzugsweise noch ein Zughebel 22 in den Kontaktbolzen 9 eingeschraubt. Dazu ist 90° versetzt zum Längsschlitz 7 des Ladekontakts 8 noch ein weiterer Führungsschlitz 13 im Ladearm 3,4 und im Metallrohr 6 von ca. 80 mm Länge vorgesehen, der ca. 40 mm vom inneren Balken-Ende beginnt und vorzugsweise senkrecht zur Balkenoberfläche nach außen absteht.

Zwischen beiden Ladearmen 3,4 ist das Mittelteil 2 als Verbindungsstück drehbar befestigt. Das Mittelteil 2 ist als t-förmiges Kunststoffspritzteil mit inneren rohrförmigen Hohlräumen ausgebildet, in dessen Längssteg 18 zwei in der Mitte isolierend beabstandete Kontakthülsen 5 als Rundelemente eingegossen oder eingepresst sind. Diese Kontakthülsen 5 besitzen vorzugsweise einen Außendurchmesser von etwa 12 mm und ragen mit ihren Kontakthülsenstümpfen 14 noch mindestens 20 mm in das Metallrohr 6 der Ladearme 3,4 hinein. Dabei ist der Außendurchmesser der Kontakthülsenstümpfe 14 so auf den Innendurchmesser des Metallrohrs 6 angepasst, dass diese leicht drehbar gelagert sind, aber eine gute elektrische Kontaktgabe gewährleisten. Die als Kontakthülsen 5 ausgebildeten Rundelemente können aber auch aus einem runden metallischen Vollmaterial oder einer Kombination aus Hülse und Vollmaterial bestehen, dessen Querschnitt an den Durchmesser des Metallrohrs 6 angepasst ist.

In den Kontakthülsenstümpfen 14 ist am Außenumfang noch ein Rundnut 15 eingearbeitet, in den ein Querstift 16 eingreift, der die Kontakthülse 5 in axialer Richtung fixiert und dadurch beide Ladearme 3,4 mit dem Mittelteil 2 verbindet. Zur starren und verdrehfesten Verbindung der Ladearme 3,4 untereinander sind noch zwei Längsstifte 17 parallel zu dem Längssteg 18 des Mittelteils 2 vorgesehen, die in zwei gegenüberliegenden Bohrungen der Stirnflächen der Ladearme 3,4 befestigt sind.

Das t-förmige Mittelteil 2 enthält neben dem Längssteg 18 noch einen Quersteg 19, der senkrecht von der Balkenlängsfläche nach außen absteht und zwei parallele Langlöcher 20 nebeneinander enthält, die in Querbohrungen 24 der Kontakthülsen 5 münden. In diese Querbohrungen 24 werden Kontaktstifte 21 eingesteckt, an denen jeweils eine nicht dargestellte Stromzuführungsleitung angeschlossen ist, wobei diese vorzugsweise angelötet oder angequetscht wird. Beide Stromzuführungsleitungen sind jeweils in eine der beiden abzweigenden Kontakthülsen 5 eingesteckt und über einen gemeinsamen Kabelmantel und eine Zugentlastung fest mit dem Kunststoffquersteg 19 verbunden. Dabei werden die Kontaktstifte 21 und Leitungs-Enden vorzugweise noch in den Langlöchern 20 mit einer klebenden aushärtenden Vergussmasse befestigt. Durch die beiden Stromzuführungsleitungen wird jeder Ladekontakt 3,4 über die Kontakthülse 5, das Metallrohr 6 und den Kontaktbolzen 9 als elektrische Übertragungselemente mit einem Gleichstrompol elektrisch verbunden. Durch die ineinander greifenden Passungen der Kontakthülse 5, dem Metallrohr 6 und dem Kontaktbolzen 9 wird eine weitgehend verschleißfreie Längs- und Querbeweglichkeit erreicht, die durch die großen Kontaktflächen auch hohe Ladeströme von bis zu 100A bei kapazitätsgroßen Fahrzeugbatterien übertragen kann. Mit einer derartigen Klemmvorrichtung sind Fahrzeugbatterien von ca. 36 bis 90 Ah mit Batteriepolabständen von beispielsweise 190 bis zum 330 mm aufladbar.

Bei kleineren Batteriepolabständen können die Längsschlitze 7 aber auch noch nach dem inneren Ladearm-Ende verlängert werden, so dass Polabstände ab 100 mm anklemmbar sind. Darüberhinaus kann die Klemmvorrichtung gleichzeitig auch für größere Fahrzeugbatterien ausgelegt werden, in dem die Ladearme 3,4 und die darin befindlichen Längsschlitze 7 verlängert werden. Allerdings ist der Verschiebeweg durch die Federkraft und den notwendigen Federweg begrenzt, der hier durch die Ausnutzung zweier Federwege optimiert ist.

Zum Laden der Fahrzeugbatterie wird die Klemmvorrichtung mit dem jeweils vorgesehenen Ladekontakt 8 richtiger Polarität hinter einer Polklemme der Fahrzeugbatterie eingehängt und der Balken 1 am anderen Ladearm 3,4 in Richtung der zweiten Polklemme so weit gezogen, bis der zweite Ladekontakt 8 hinter der zweiten Ladeklemme abgesenkt werden kann. Bei größeren Batterien kann dazu vorzugsweise auch der zweite Verschiebeweg zum Rückzug mit einem Finger am nach außen geführten Zughebel 22 um nochmals ca. 100 mm verlängert werden, so dass in jedem Fall eine Einhandbedienung zum Anklemmen auch größerer Fahrzeugbatterien ausreicht.

Nach dem Loslassen drückt die Federkraft die Ladekontakte 8 vorzugsweise an die Polklemmen der eingebauten Fahrzeugbatterien und stellt dadurch auch auf Dauer einen niederohmigen Kontakt sicher. Dazu sind durch die Federspannung als Ladekontakte 8 einfache zylinderförmige Rundstifte ausreichend, die für nahezu alle gängigen eingebauten Batteriearten einsetzbar sind. Als Ladekontakte 8 können aber auch aufsteckbare Klemmzangen oder Steckklammern verwendet werden. Bei derartigen steckbaren Ladekontakten könnte auch auf die Federspannung zur sicheren Kontaktgabe verzichtet werden, so dass lediglich verschiebbare Kontaktbolzen 9 ohne Schraubenfeder 11 ausreichen würden. Dabei könnten die einzelnen Polabstände auch durch arretierbare Kontaktbolzen 9 voreingestellt werden, so dass die Klemmvorrichtung durch einen Aufsteckvorgang erfolgen würde. Zur verpolungssicheren Handhabung könnten die einzelnen Ladekontakte 8 auch unterschiedlich ausgebildet sein, so dass sie bei unterschiedlichen Batterieanschlussklemmen nur verpolungssicher anklemmbar wären. Da die meisten Polklemmen aber technisch gleichartig ausgebildet sind, werden die Ladearme 3,4 vorzugsweise mit einer farblichen Polmakierung mit "rot" für den Pluspol und "schwarz" für den Minuspol gekennzeichnet. Dazu werden vorzugsweise elastische farblich markierte Kunststoffhülsen an jedem Ladearm 3,4 fixiert.

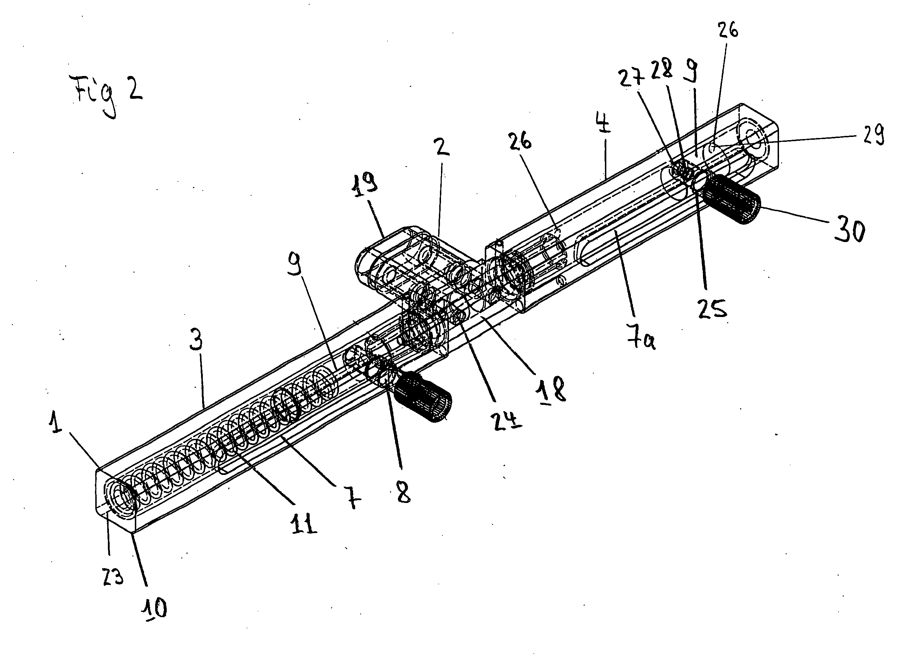

In Fig. 2 der Zeichnung ist als weitere Ausbildung eine Klemmvorrichtung dargestellt, bei der ein erster Ladekontakt 8 gegen eine Federkraft und ein zweiter Ladekontakt 25 vorzugsweise zwischen zwei Arretierungsstufen verschiebbar ist. Diese Ausführung der Klemmvorrichtung ist vorzugsweise für sehr kleine und mittlere Polabstände vorgesehen, wie sie wahlweise für Fahrzeuge mit Ladestützpunkten und gleichzeitig für Fahrzeuge mit normal erreichbaren Fahrzeugbatterien eingesetzt werden können. Denn während der Fahrzeugproduktion werden auf einem gemeinsamen Produktionsband häufig unterschiedliche Fahrzeugtypen gefertigt, die teilweise schwer erreichbare Fahrzeugbatterien besitzen, die nur über Ladestützpunkte im Motorraum aufladbar sind. Diese Ladestützpunkte besitzen teilweise sehr kleine Ladekontaktabstände von z.B. 120 mm, die kleiner sind als die für die kleinsten Fahrzeugbatterien, so dass diese mit den üblichen Verschiebewegen wie bei der Klemmvorrichtung nach Fig. 1 der Zeichnung nicht erreichbar sind. Deshalb wurde für die wahlweise Aufladung von Fahrzeugbatterien herkömmlicher Größe und einer Aufladung über einen derartigen Ladestützpunkt eine zweistufige Arretierung vorgesehen, durch die eine wahlweise Anpassung auf die Ladestützpunkte oder einen üblichen Polabstand erfolgen kann. Deshalb ist der eine für den Pluspol vorgesehene Ladearm 9 im wesentlichen wie der nach Fig. 1 der Zeichnung ausgebildet, allerdings ohne die für die großen Polabstände vorgesehenen Zughebel 22. Dieser Ladearm 3 besteht ebenfalls aus einem Vierkantkunststoffkörper 23, in dem ein Metallrohr 6 aus Messing integriert ist, in dem ein durch ein Längsschlitz 7 abstehender erster Ladekontakt 8 längsverschieblich geführt ist. Dieser ist an einem Kontaktbolzen 9 angeschraubt, der sich auf eine Schraubenfeder 11 zum Ladearm-Ende 10 abstützt.

Der Ladearm 4 für den Minuspol ist hingegen ohne eine Schraubenfeder 11 ausgeführt, wobei sich der Kontaktbolzen 9 zwischen zwei vorgegebenen Arretierungspunkten 26,26a verschieben lässt, die an den Endpunkten des zweiten Längsschlitzes 7a vorgesehen sind. Dazu sind in der Querbohrung für die Befestigung des zweiten Ladekontaktes 25. noch eine Metallkugel 27 als Arretierungselement eingelegt, die durch eine Druckfeder 28 durch eine Öffnung zur Innenwand des Metallrohrs 6 nach außen gedrückt wird. In den Innenwand des Metallrohres 6 sind an den beiden Endpunkten 26,26a als Arretierungspunkte des Verschiebeweges ebenfalls zwei an die Metallkugeln angepasste Aussparungen 29 eingelassen, die eine Arretierung für die federbelastete Kugel 27 darstellt. Damit ist eine Arretierung am inneren Endpunkt 26 des zweiten Längsschlitzes 7a für den Minuspol des Ladekontakts 25 möglich, der zum ersten Ladekontakt 8 einen Abstand von mindestens 120 mm einstellt.

Dieser Abstand ist vorzugsweise für die Ladung über einen Ladestützpunkt bestimmter Fahrzeugtypen vorgesehen, bei denen diese Ladepole zum Beispiel 135 mm voneinander beabstandet sind. Beim Laden eines derartigen Fahrzeugs wird der Kontaktbolzen 9 in diese innere Arretierungsposition 26 verschoben und zwischen die 135 mm beabstandeten Ladepole des Ladestützpunkts geklemmt. Zur Anpassung der speziellen Ladepole dieses Ladestützpunkts bei dem einer höhenversetzt angeordnet ist, sind beide Ladekontakte 8,25 durch eine koaxial angeordnete Verlängerungshülse 30 längs verstellbar ausgebildet. Die Ladekontakte 8,25 können aber auch an andere Polkontaktausführungen durch entsprechende Formgebung oder spezielle Klemmfunktionen adaptiert werden.

Verschiebt man die Kugelarretierung 27 hingegen zum anderen Arretierungspunkt 26a, so entsteht ein Ladekontaktabstand von vorzugsweise mindestens 190 mm, der durch die einseitige Federspannung auf bis zu 290 mm verlängerbar ist, wie er für die meist gebräuchlichen Fahrzeugbatterien ausreicht. Die Arretierung kann aber noch mit mehreren Arretierungspunkten 26 ausgeführt werden, indem in das Metallrohr 6 in vorgegebenen Abständen weitere Aussparungen 29 vorgesehen sind. So können die Polabstände vorab für herkömmliche Batteriearten eingestellt werden, wodurch insbesondere bei der Ladung größerer Batteriekapazitäten nur geringe Federwege und Zugkräfte notwendig sind. Mit derartigen arretierbaren Ladearmen 3,4 sind nicht nur beliebig kurze, sondern auch beliebig lange Ladekontaktabstände realisierbar, wie sie bei Sonderausführungen vorkommen können. Derartig universell einstellbare Polabstände haben insbesondere in der Serienfertigung von Kraftfahrzeugen den Vorteil, dass man in kürzester Zeit Anpassungen an unterschiedliche Fahrzeugbatterien oder an Ladestützpunkte vornehmen kann, ohne die Klemmvorrichtung wechseln zu müssen.

## Patentansprüche

1. Klemmvorrichtung zum Laden einer Fahrzeugbatterie, die als langgestreckter Balken (1) ausgebildet ist, der aus zwei durch ein drehbar gelagertes Mittelteil (2) verbundene Ladearmen (3,4) besteht, wobei in jedem Ladearm (3,4) elektrische Übertragungselemente integriert sind, die mit jeweils einem seitlich nach außen abstehenden Ladekontakt (8,25) verbunden sind, **dadurch gekennzeichnet, dass** die elektrischen Übertragungselemente jeweils aus einem in jedem Ladearm (3,4) eingelassenen Metallrohr (6) bestehen, in dem ein eingepasster Kontaktbolzen (9) längs verschiebbar angeordnet ist und an dem der Ladekontakt (8,25) befestigt ist und bei dem der Ladekontakt (8,25) mindestens durch einen Längsschlitz (7) in den Metallrohren (6) nach außen geführt ist und dass das Mittelteil (2) zwei axial in einem Isolierwerkstoff befestigte isolierend voneinander beabstandete metallische Rundelemente (5) enthält, die in die eingelassenen Metallrohre (6) der Ladearme (3,4) eingepasst und axial fixiert sind und die steckbar mit jeweils einem Anschlusspol eines Anschlusskabels verbunden sind.

2. Klemmvorrichtung nach Anspruch 1, **dadurch gekennzeichnet, dass** mindestens in einem Ladearm (3,4) eine druckbelastete Schraubenfeder (11) vorgesehen ist, die zwischen den Kontaktbolzen (9) und dem Ladearm-Enden (10) angeordnet ist, gegen dessen Federkraft der Kontaktbolzen (9) axial verschiebbar ist.

3. Klemmvorrichtung nach Anspruch 1 oder 2, **dadurch gekennzeichnet, dass** mindestens in einem Ladearm (3,4) ein Kontaktbolzen (9) mit Arretierelementen (27) vorgesehen ist, die in mindestens zwei in vorgegebenen Abständen voneinander angeordneten korrespondierenden Aussparungen (29) oder Erhebungen eingreifen, die in der gegenüber liegenden Metallrohrwand des jeweiligen Ladearms (3,4) angeordnet sind.

4. Klemmvorrichtung nach einem der vorhergehenden Ansprüche, **dadurch gekennzeichnet, dass** mindestens an einem Kontaktbolzen (9) zusätzlich ein Zughebel (22) befestigt ist, der durch einen Führungsschlitz (13) mindestens in der Metallrohrwand nach außen geführt ist und der so angeordnet ist, dass mit Hilfe eines Fingers der Zughand der Ladekontaktabstand zusätzlich verlängerbar ist.

5. Klemmvorrichtung nach einem der vorhergehenden Ansprüche, **dadurch gekennzeichnet, dass** die Ladekontakte (8,25) als zylinderförmiger Rundstift, als steckbare Klemmzange oder als Steckklammer ausgebildet sind.

6. Klemmvorrichtung nach einem der vorhergehenden Ansprüche, **dadurch gekennzeichnet, dass** mindestens ein Ladekontakt (8,25) mindestens eine koaxial angeordnete Verlängerungshülse (30) aufweist, die axial verstellbar angeordnet ist und zur Verlängerung des Ladekontakts (8,25) dient

7. Klemmvorrichtung nach einem der vorhergehenden Ansprüche, **dadurch gekennzeichnet, dass** das Mittelteil (2) als Kunststoffspritzteil ausgebildet ist, das mindestens einen hohlen Quersteg (19) und einen Längssteg (18) aufweist, wobei in dem Längssteg (18) die beiden metallischen Rundelemente (5) axial zueinander befestigt sind und deren Stümpfe (14) mit den Metallrohren (6) ein elektrisch leitfähiges niederohmiges Drehlager bilden.

8. Klemmvorrichtung nach Anspruch 7, **dadurch gekennzeichnet, dass** das metallische Rundelement (5) als Kontakthülse oder als Rundbolzen ausgebildet ist, dessen Hülsenstumpf (14) oder Rundbolzenstumpf formschlüssig in das Metallrohr (6) eingepasst ist oder durch ein metallisches Übergangselement eingepasst ist.

9. Klemmvorrichtung nach Anspruch 7 oder 8, **dadurch gekennzeichnet, dass** im Quersteg (19) zwei parallel angeordnete Langlöcher (20) vorgesehen sind, die jeweils in einer Querbohrung (24) der Rundelemente (5) enden, in die Kontaktstifte (21) oder -stecker zur formschlüssigen Verbindung mit einem Anschlusskabel zur Ladespannungsversorgung eingesteckt sind.
